# EUROPEAN PATENT SPECIFICATION

(11) **EP 2 991 843 B1**
(45) Date of publication and mention of the grant of the patent: **25.11.2020**
(21) Application number: 13883577.2
(22) Date of filing: 29.04.2013
(51) Int. Cl.: B60G 3/18, B60G 11/00, B60G 13/00, B60G 15/00, B62D 53/08, B60G 15/06, B60G 15/08, B60G 3/20, B60G 15/14

(54) **A HEAVY VEHICLE COMPRISING AN INDIVIDUAL WHEEL SUSPENSION**
SCHWERLASTFAHRZEUG MIT EINZELRADFEDERUNG
POIDS LOURD COMPORTANT UNE SUSPENSION DE ROUE INDIVIDUELLE

(43) Date of publication of application: 09.03.2016
(73) Proprietor: Volvo Truck Corporation, 405 08 Göteborg (SE)
(72) Inventor: SVENSSON, Roland, S-430 22 Väröbacka (SE); HENDRIKS, Jan, S-426 68 Västra Frölunda (SE); ANDERSSON, Jörgen, S-438 33 Landvetter (SE)
(74) Representative: Valea AB
(86) International application number: PCT/SE2013/000060
(87) International publication number: WO 2014/178761

(56) References cited:
- WO-A1-02/26548
- WO-A2-2012/064183
- DE-A1-102010 039 578
- US-A1- 2003 047 906
- US-A1- 2006 055 162
- US-A1- 2011 079 978
- US-A1- 2011 233 887
- US-A1- 2012 256 392
- US-A1- 2013 048 406
- US-B1- 6 736 232
- US-B1- 6 820 900

## Description

### FIELD OF THE INVENTION

The present invention relates to a heavy vehicle, for example a truck or a tractor for hauling a trailer, wherein the vehicle comprises an individual wheel suspension for at least one wheel pair, which has a beneficial load distribution of load from for example goods/cargo to the ground.

### BACKGROUND TO THE INVENTION

Heavy vehicles for hauling a trailer or trucks being provided with goods or functional units such as construction units may during travel experience different types of undesired movements from the trailer or goods or functional unit which cause undesired effects on the vehicle performance. Among these movements, rolling and vibrations are commonly discussed.

Rolling movements may cause roll-over situations for heavy vehicles. Rolling is a movement caused by dynamic rotational or side forces on the goods/trailer. It may for example arise as a result of a strong steering maneuver at high speed, at slippery road condition, or during a strong deceleration of the vehicle in a curve. Rolling may cause that the vehicle control is lost or in the worst scenario even that the whole vehicle may tip. In order to avoid such situations, the vehicle may be equipped with an electronic protection system which can warn the driver about rolling activity. Also the attention of the driver is crucial. Today rolling causes a number of accidents each year.

Vibrational movements are affecting the life-time of functional components and the driver's comfort. Vibration may cause the failure of important components which may result in risks during driving. Also, it is important to reduce vibration as much as possible for the ergonomics and comfort for the driver. In order to reduce vibrations, the cab may for example be suspended with a spring type suspension.

In US 4566716, a tractor for a tractor-semitrailer combination comprising a fifth wheel and a rigid rear wheel suspension is disclosed. The fifth wheel is directly connected to the rear axle by using a vertically extending support column fixed between a base and the rear axle. The fifth wheel is mounted to an air cushion arranged on top of the base and is articulated to the base around a shaft. The base is further connected to the frame by arms. The fifth wheel is directly supported by the rear axle, and the tractor does not directly carry the load from the trailer, but still pulls it and the tractive forces are picked up by the links and arms. It is described that the dynamic behavior of the tractor thereby is improved. At the same time, the vibrational level in the cab is described to be reduced. However, the arrangement described in US 4566716 would only result in limited reduction of rolling-activity to certain extent. Further, the arrangement makes the positioning of the fifth wheel rather limited, because since it needs to be directly connected to the rear axle and pivotally arranged, it is not possible to mount the fifth wheel to the frame.

According to its abstract, US-B-6820900 relates to a rear axle arrangement for a heavy vehicle, e.g. a freight vehicle. The vehicle incorporates a number of wheels which bear the vehicle and an elongate chassis element which extends in the longitudinal direction of the vehicle. The rear axle arrangement incorporates at least one separate rear axle unit which includes a load bearing frame structure and two of said wheels. The frame structure extends between a first end region and a second end region in the longitudinal direction of the vehicle and the first end region of the frame structure is designed to be connected to the elongate chassis element. In addition, the two wheels are suspended on the frame structure. According to its abstract. WO-A-2012/064183 relates to a mounting arrangement for mounting a trailer coupling to a tractor vehicle with a chassis that has a pair of rearwardly extending opposite left and right frame side members that includes opposite left and right bearing blocks. The opposite left and right bearing blocks each have a support surface and a pivot bearing for being fixed directly or indirectly to the chassis of the tractor vehicle. A coupling saddle plate is pivotally mounted from the opposite pivot bearings of the left and right bearing blocks, while a diagonal cross brace is provided between at least one of the left and right bearing blocks and a respective one of the transversely opposite right or left frame side members. The diagonal cross brace comprises at least one diagonally extending leg that is adapted to extend laterally inwardly and diagonally downward from at least one of the left and right bearing blocks. According to its abstract. US-A-2003/047906 relates to a short span fifth wheel hitch comprising a hitch plate, at least one back rib. a peripheral flange connected to ends of the back rib, and a main rib extending between the back rib and a portion of the peripheral flange, with the main rib being connected to ends of the peripheral flange. The fifth wheel hitch also includes skirts extending from the hitch plate adjacent the back rib. At least two pairs of mounting ribs are located interior of the peripheral flange and the back rib, each pair of mounting ribs including aligned apertures for accepting a mounting pin therein, whereby a mounting bracket can be inserted into a space between the mounting ribs of each pair of mounting ribs and the mounting pin can be placed through the aligned apertures and the mounting bracket to connect the fifth wheel hitch to a tractor. Here, reference is also made to each one of Fig. 8 - Fig. 13 of US-A-2003/047906.

Hence, there is a continuous need in the art for finding new and improved ways of increasing the vehicle performance during driving of a heavy vehicle.

### SUMMARY OF THE INVENTION

It is an object of the present invention is therefore to find a solution to the problems indicated above, and hence to increase the performance for a vehicle such as a heavy truck or tractor during driving, in particular by reducing the risk for rolling activity, finding ways of reducing vibrations in order to increase the life-time of vehicular components, and at the same time to increase the ergonomics and comfort for the driver.

According to a first aspect, the present invention relates to a heavy vehicle comprising a frame structure extending in a longitudinal direction of the vehicle, at least a first wheel, an independent wheel suspension for said at least first wheel and a load carrying structure for carrying a load applied to the vehicle, wherein the independent wheel suspension comprises a first spring and/or damper arrangement wherein the first spring and/or damper arrangement at a first end is connected to the load carrying structure in a position above or beside said frame structure and which at a second end is connected to the first wheel. Thereby, at least part of a load (F), preferably a major part of the load (F), is allowed to be distributed from the load-bearing structure to the first wheel via the first spring and/or damper arrangement bypassing the frame structure. By using individual wheel suspension combined by positioning the spring and/or damper arrangement as defined above, the load (F) is transferred in an efficient way to the wheels in a way in which the effect of rolling activity can be significantly reduced. Especially, since an individual wheel suspension arrangement is used, the load (F) is efficiently taken care of by the counterforce in the spring and/or damper arrangement resulting from the load impact. This combined with connecting the upper part of the spring and/ or dampers beside or above the frame structure instead to directly to the frame structure, the load (F) can be distributed to the wheels in a more direct way compared to attaching them to the frame structure. It should be noted that the present invention has the advantage that the load carrying structure can be mounted and partly carried by the frame structure, and that no extra support structures such as the links and arm structure as described in US4566716 is needed. In addition, a more beneficial load distribution is achieved since the load is transferred in a more direct way to the wheels compared to allowing the load to be transferred to a central point of a rigid axle, and through the whole axle before reaching the wheels.

The resulting load distribution of stationary forces is beneficial since a significant part of the load acting on the load carrying structure is distributed to the wheels bypassing the frame structure via the spring and/or damper arrangements. As the frame structure is bypassed, the frame structure is exposed to less load impact. Also, it has been found that dynamic load distribution from the load carrying structure, i.e. temporary load acting on the load carrying structure such as rolling behavior and vibrations can be significantly reduced by the concept of the invention. The load distribution mechanism is further explained in the detailed description of the invention.

In embodiments of the invention, the first wheel is a rear wheel. When rear wheels of a wheel pair are provided with the individual wheel suspension arrangement according to the invention, the inhibition of rolling is significant, see Example 2 below.

In embodiments of the invention, the spring and/or damper arrangement is formed as one component comprising both spring and damper function. Thereby, the component both controls vertical movements of the wheel and controls load distribution from a load carrying structure to the wheels in terms of both spring and damper action.

In embodiments of the invention, the first spring and/or damper arrangement is arranged with an inclined operational direction in relation to a height axis (Y) of the vehicle. The height axis (Y) coincides with the center point between the longitudinal frame beams. Thereby, a surprisingly good improvement of the anti-roll effect is achieved compared to using vertical spring and/or damper arrangements. The inclined operational direction can be described by an upper portion of the spring and/or damper arrangement being positioned more close to the center between the longitudinal frame beams than a lower portion of the spring and/or damper arrangement. Preferably, the inclined operational direction of the first spring and/or damper arrangement relative to the height axis (Y) and the length of the first spring and/or damper arrangement form an angle a which is in the range of from 20 to 60 degrees, such as in the range of from 40 to 60 degrees in order to achieve an improved effect.

In embodiments of the invention, the first spring and/or damper arrangement may have a spring function resulting from an air spring, a gas spring, a hydraulic spring, a coil spring, a rubber spring and/or a leaf spring. The spring function allows for an efficient uptake of vibrations or rolling activity distributed from the load carrying structure. Preferably, the spring and/or damper arrangement may comprise an air bellow. This provides an efficient spring function.

In embodiments of the invention, the first spring and/or damping unit may have a damper function resulting from an air damper, a gas damper, a hydraulic damper and/or a rubber damper. The damper function allows for an efficient uptake of dynamic forces such as temporary load impacts, for example when the vehicle is driving over a bump resulting in rolling forces. Preferably, the spring/and/or damper unit may be a hydraulic damper.

In embodiments of the invention, the first spring and/or damper arrangement may comprise both a spring and a damper function. This allows for an efficient load up-take, due to synergistic effects which thereby are achieved. Preferably, the spring element may be arranged on top of a damper element. It was found to be advantageous to use a first spring and/or damper arrangement comprising an air bellow and a hydraulic damper.

In embodiments of the invention, the first spring and/or damper arrangement is connected directly or indirectly to an outer part of the load carrying structure. Preferably, the second end of the first spring and/or damper arrangement may be connected to a wheel hub of the first wheel, or connected to a wheel suspension rod attached on the wheel hub. Thereby, an efficient distribution of load to the wheels is achieved, especially with regards to inhibition of rolling activity.

In embodiments of the invention, the first spring and/or damper arrangement is connected to the load carrying structure indirectly via a chassis component. The chassis component hence carries the load carrying structure. The chassis component provides an efficient way of arranging the individual wheel suspension according to the concept of the invention. The chassis component can preferably be positioned at least partly between the first wheel and a second wheel, wherein the first and second wheels are positioned on opposite sides of the vehicle at the same length distance from the front of the vehicle. The chassis component may be connected to the frame structure, preferably at an end portion or at the end of the frame structure. Thereby, the chassis component functions as an extension of the frame structure.

In embodiments of the invention, the frame structure comprises two frame members/rails/beams which are spaced apart from each other and are arranged in longitudinal direction relative to the vehicle. Preferably, the chassis component is arranged at least partly between the two longitudinal frame members. Thereby the chassis component can function not only as a support structure for the load carrying structure, but also function as a frame cross-member. Advantageously, the chassis component can be connected to the frame beams and extend behind the frame beams, thus a frame-extending function is achieved. Alternatively, the frame structure may comprise a central frame member arranged in a longitudinal direction relative to the vehicle, and wherein the chassis component can be connected to the central frame member at the rear end of the central frame member. As a result a very efficient packaging of components in the vehicle can be achieved.

In embodiments of the invention, the chassis component comprises a body having a main portion and an upper portion provided on top of the main portion. The main portion is connected to the frame structure, such a at an end portion of the frame structure, and the upper portion of the chassis component is connected to the load carrying structure and is also connected to the first an optionally the second spring and/or damper arrangement. Thereby, at least part of a load (F) from said load carrying structure is allowed to be distributed to the first wheel via the spring and/or damper arrangement bypassing said frame structure. Since the spring and/or damper arrangements are positioned in an upper part of the body while the frame structure is connected to the body at a lower position than the direct or indirect connection points to the load carrying structure, forces from the load carrying structure can be distributed to the wheels efficiently with reduced distribution through the frame structure.

Advantageously, the upper portion comprises two or more upwards extending portions, at least one on each side of the main portion, wherein each of said upwards extending portions comprises connection elements for the spring/and or damper arrangements and the load carrying structure. This has been found as a suitable construction for certain types of load carrying structures in order to achieve and effective load distribution. One example of a suitable application is where the load carrying structure is a fifth wheel for hauling a trailer.

In embodiments of the invention, the chassis component comprises a hollow space for housing one or more functional units, such as at least a part of a propeller shaft, a gear box, and/or a differential unit. Also, the hollow space may be used for housing a drive unit such as an electrical, hydraulic or gas engine. This results in an efficient packaging of components. In this way the chassis component becomes multi-functional, both acting as a connection member to the spring element and the frame structure and also acting as housing for a functional component.

In embodiments of the invention, the chassis component is more rigid than the frame structure in a transverse direction relative to the length of the vehicle. The stiff construction is advantageous for avoiding deformation/mechanical failure of the chassis component. In addition, it is beneficial since the stability of the wheel suspension is further increased. Further, this is advantageous when arranging a functional unit inside the chassis component. For example, a gear box requires a significant stiff housing so that the service life-time of the gear components can be ensured.

In embodiments of the invention, the chassis component may comprise connection elements for one or several functional units on the outside of the chassis component, for example connection elements may be provided for a gear box on an outer rear or front surface of the main portion.

In most applications of the invention, the independent wheel suspension will further comprise a second spring and/or damper arrangement which at a first end is connected to the load carrying structure in a position above or beside the frame structure and which at a second end is connected to a second wheel. The second wheel is positioned on opposite side of the frame structure at the same length position from a front of the vehicle as the first wheel. The second spring and/or damper arrangement advantageously may have the same characteristics as defined for the first spring and/or damper arrangement. The wheel pair may be a rear wheel pair. As used herein rear wheel pair means a wheel pair not being the front wheel pair. For example, the rear wheel pair may be positioned within the second rear half of the chassis and may be the last wheel pair at the rear of the vehicle. The rear wheel pair is advantageously a driven wheel pair. Advantageously, the independent wheel suspension may also comprise a third and fourth spring and/or damper arrangements. These may be arranged at each side of the load carrying structure and attached to a wheel hub/rod of the wheel pair. In some embodiments, the first and second spring/damper units may have only spring function, while the third and fourth spring/damper unit may have damper function. Alternatively, they may have both spring and damper effect.

The invention is suitable for a load carrying structures which are centrally placed on the heavy vehicle, which traditionally have been mounted on top of the frame structure. The load carrying structure present on the vehicle may be any component/unit which is heavy or which carries a high weight (except for the longitudinal frame beams). The load carrying structure may for example be a fifth wheel or a fifth wheel holder, a goods supporting structure, a box for goods, a container, a swap body, an on-built console structure or an on-built functional unit.

Especially, the invention is very suitable for a tractor for hauling a trailer where the load carrying structure is a fifth wheel or fifth wheel holder. The vibrations and rolling activity can be significantly reduced and the need of anti-roll bars is significantly reduced.

### BRIEF DESCRIPTION OF THE DRAWINGS

The present invention together with the above mentioned and other objects and advantages may best be understood from the following detailed description of the embodiments, but not restricted to the embodiments, wherein is shown schematically:
Fig. 1a shows a vehicle according to a first embodiment not part of the invention, exemplified by a tractor for a tractor-trailer combination comprising a fifth wheel as load carrying structure.
Fig. 1b shows a rear portion of the tractor according to the first embodiment not part of the invention.
Fig. 2a shows a rear portion of a vehicle according to the invention.
Fig. 2b is a planar rear view of the chassis component used in the invention.
Fig. 2c is a perspective front view of the chassis component when mounted to a vehicle according to the second embodiment.
Fig. 2d is a perspective rear view of the chassis component when mounted to a vehicle according to the invention.
Fig. 3 shows a vehicle according to a third aspect of the invention, where the vehicle comprises a support structure for goods as load carrying structure.
Fig. 4 shows a truck having a console structure as load carrying structure.
Fig. 5 shows a rear portion of a vehicle according to an additional embodiment the invention.

### DETAILED DESCRIPTION

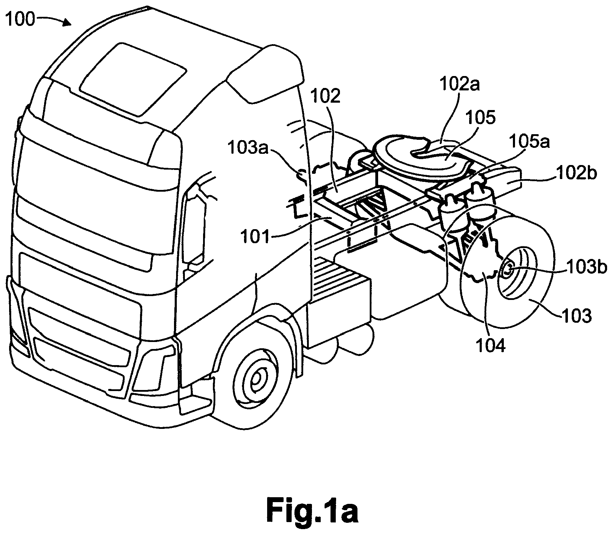

Fig. 1a depicts a first embodiment of the invention, in which a heavy vehicle exemplified by a tractor 100 for hauling a trailer is shown. The tractor 100 comprises a frame structure 102 extending in a longitudinal direction of the vehicle, a first and second wheel 103a and 103b which are suspended by an individual wheel suspension 104. Further, a load carrying structure 105 configured for carrying a load applied to the vehicle is arranged on the frame structure 102. In Fig. 1a, the load carrying structure is a fifth wheel 105 arranged on top of the frame structure 102 via a fifth wheel holder 105a.

The frame structure 102 comprises two elongated frame beams 102a, 102b, which are spaced apart from each other and extend along the length direction of the vehicle. Each of the frame beams may have a U-profile cross-section. The frame beams are connected to each other by cross-member frame beams 101 which are positioned in transverse direction relative to the longitudinal frame beams. Alternatively, the frame structure 102 may be centrally positioned with a smaller distance between the longitudinal beams than traditionally.

The tractor 100 is provided with an individual wheel suspension 104 for a wheel pair 103. The wheels 103a and 103b are members of the same wheel pair 103, wherein the wheels are positioned on the opposite side of the vehicle at the same length distance from the front. In this embodiment, the wheel pair is a rear wheel pair.

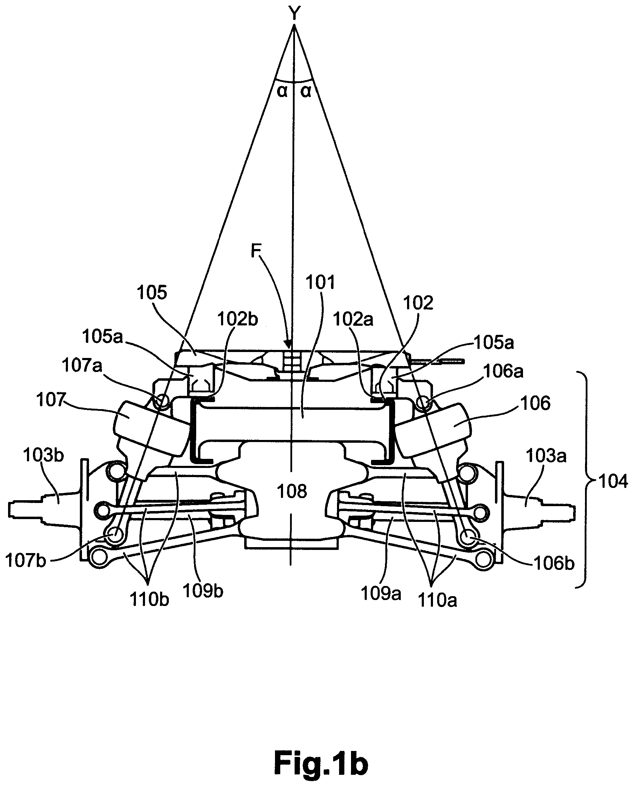

The load carrying structure 105 is configured for carrying a load applied to the vehicle. In Fig. 1a and b, the load carrying structure 105 is illustrated by a fifth wheel 105 and a fifth wheel holder 105a. However, the load carrying structure 105 may also be a goods supporting structure, a box for goods, a container, a swap body, an on-built console structure or an on-built functional unit. For example, the load carrying structure may be an on-built unit centrally positioned member for example a console structure for functional equipment, i.e. a crane, a lift, a digger, or a concrete mixer. Also, the load carrying structure 105 may be an on-built support structure for goods for example a support structure for timber. As used herein, the term "load carrying structure" does not include the longitudinal frame beams 102a and 102b.

Fig. 1b schematically depicts a rear view of a portion of the heavy vehicle 100 and shows the individual wheel suspension 104 in more detail. (In Fig. 1b, the wheels 103a and 103b are illustrated by its wheel hubs without showing its tires.)

The individual wheel suspension 104 comprises individual drive axles 109a and 109b for rotating each of the first and second wheels 103a and 103b. A differential unit 108 is mounted to the frame, for example to a frame cross-member 101. Hence, the differential unit 108 is positioned between the frame beams 102a and 102b. The drive axles 109a and 109b extend from and are pivotally connected to the differential unit 108.

Further, the individual wheel suspension 104 comprises spring and/or damper arrangements 106 and 107 which each are used as suspension elements for one of the wheels 103a and 103b respectively. The spring and/or damper arrangements 106 and 107 are connected one to each of the wheels 103a, 103b and controls the vertical movement and load capacity on the wheels.

The individual wheel suspension 104 allows for that the wheels 103a and 103b can move vertically independent from each other. Hence, when one wheel is driving over a bump, the opposite positioned wheel of the wheel pair is not significantly influenced by the vertical movement of the wheel exposed to the bump. Therefore, the opposite positioned wheel is having increased contact to the ground compared to using a rigid axle suspension arrangement where the wheels in a wheel pair are connected by a rigid axle. Preferably, the drive axles 109a and 109b are also pivotally arranged to the wheels 103a and 103b so that the wheels can move vertically without being tilted.

By using the individual wheel suspension 104 comprising the spring and/or damper arrangements 106 and 107, an advantage load distribution from the load carrying structure 105 to the wheels 103a and 103b can be achieved where at least part of a load (F) can be distributed from the load carrying structure 105 to the first and second wheels 103a and 103b via the first and second spring and/or damper arrangements 106 and 107 bypassing the frame structure 102. Below the spring and/or damper arrangements 106 and 107 are described in more detail.

The spring and/or damper arrangement 106 may be a spring element alone or a damper unit alone. Preferably, the arrangement may comprise both a spring and a damper component which are either positioned spaced apart or present as an integrated unit being a combination of a spring and a damper.

The spring function may be obtained by using for example an air spring, a gas spring, a hydraulic spring, a coil spring, a rubber spring and/or a leaf spring. Alternatively, or additionally, the arrangement 106 may include a damper for example an air damper, a gas damper, a hydraulic damper and/or a rubber damper. In the embodiment illustrated in Fig. 1a and 1b, the spring and/or damper arrangement 106 is in the form of a combined unit, in which an air bellow which is situated on top of a hydraulic damper.

The spring and/or damper arrangement 106 is arranged between the load carrying structure 105 and the wheel 103a. The first end (upper portion) 106a of the spring and/or damper arrangement 106 is connected to the load carrying structure 105 in a position above or beside the frame structure 102 and a second end 106b of it is connected to the first wheel 103a. The first end 106a may be connected pivotally directly or indirectly to the load carrying structure 105. The second end (lower portion) 106 b of the spring and/or damper arrangement 106 may be directly or indirectly pivotally connected to the wheel 103a. For example, the second end 106b may be pivotally connected to the wheel hub or a wheel suspension rod, preferably at an end portion close to the wheel hub. It should be noted that according to the present invention, it is avoided to directly or indirectly connect the spring and damper unit 106 to the frame structure 102. The wording "directly connected" is used herein to describe that the unit is attached to the load carrying structure/wheel by fixing means, while "indirectly connected" is used to describe that the unit is attached to the load carrying structure via one or more other components.

As seen in Fig. 1b, the spring and/or damper arrangement 106 is positioned beside the frame structure, with its upper end attached to the fifth wheel 105 indirectly via the support structure 105a. However, it is not limited to this configuration. In some embodiments, the upper portion i.e. the first end 106a of spring and/or damper arrangement 106 extends above the upper edge of the longitudinal frame structure 102. In other embodiments of the, load carrying structure 105 or the support structure 105a to which the spring and/or damper arrangement is connected extends below the upper edge of the frame structure. It is preferred that the spring and/or damper arrangement 106 extends to or above an upper edge of the longitudinal frame structure 102.

Since the spring and/or damper arrangement 106 is in direct or indirect contact with the load carrying structure 105 and the spring and/or damper arrangement 106 is connected to the wheel 103a, load is distributed from the load carrying structure 105 to the wheels 103 with a minimum load distribution via the frame structure. Since an individual wheel suspension arrangement 104 is used, the load (F) is efficiently taken care of by the counterforce in the spring and/or damper arrangement 106 resulting from the load impact.

The spring and/or damper arrangement 107 can be arranged in an equivalent way between the load carrying structure 105 and the second wheel 103b as the first spring and/or damper arrangement 106 is arranged between the load carrying structure 105 and the first wheel 103a. Hence, the second spring and/or damper arrangement 107 may have the same characteristics as the first spring/and or damper unit 106 with the difference that the position is on the opposite side of the load carrying structure compared to the first spring and/or damper arrangement 106. In Fig. 1b, the spring and/or damper arrangement 107 is arranged between the load carrying structure 105 and a second wheel 103b. More specifically, the spring and/or damper arrangement 107 is connected with its upper portion 107a connected to the fifth wheel holder 105b and with its lower portion 107b connected to the wheel hub 103b. Hence, the springs and/or dampers arrangements 106 and 107 are in mechanical contact to the load carrying structure 105 and connected to each wheel 103a, 103b respectively, so that the spring/damper unit 106, 107 extends from the load carrying structure 205 to the wheel hubs 103a, 103b bypassing the frame structure 202.

The differential unit 108 is arranged within the frame structure 102. The differential unit 108 comprises two vertical side surfaces which are positioned in a direction extending along a longitudinal direction of the vehicle and which are provided with holes for the drive axles 109a and 109b for the wheels 103a and 103b respectively. The drive axles 109a and 109b are pivotally attached to the differential unit 108 and to the wheel 103a so that the wheel 103a is allowed to move in vertical direction without influencing the ground contact of wheel 103b.

Wheel suspension rods 110a and 110b may be arranged between the differential unit 108 and the wheels 103a and 103b. Alternatively, the wheel suspension rods 110a and 110b may also be connected to other parts of the chassis for example the frame structure 102. The amount of wheel suspension rods and suitable positioning of these will depend on the specific application. In the embodiment in Fig. 1, three wheel suspension rods 110a and 110b are used for each of the wheels 103a and 103b, including two V-shaped rods and a toe-link rod provided at each of the wheels 103a and 103b. The wheel suspension rods 110a and 110b are arranged between the wheels and the differential unit 108.

The wheel suspension 104 may comprise further spring and/or damper arrangements (not shown in Fig. 1) which connects each of the wheels in the wheel pair to the load carrying structure. It was found preferably to use an air bellow arranged on top of a hydraulic damper as spring and/or damper arrangements. In several embodiments of the invention, it has been found advantageous to apply two spring and/damper units at each wheel 103a and 103b in the wheel pair.

The load distribution mechanism achieved will now be in detail explained. A load carrying structure on a vehicle is normally exposed to two different types of load, namely stationary load and dynamic load. Stationary load (F) from the load carrying structure 105 as used herein means load which is distributed to the wheels when the vehicle does not move. The amount of stationary load acting on each of the wheels of the vehicle depends on where along the vehicle the load carrying structure 105 is positioned. An important parameter when considering the stationary load distribution is therefore the wheel base length i.e. the length between the front wheel pair and the next (second) wheel pair. For example, for a tractor having a wheel base length X and a fifth wheel positioned at a distance10% of X from the second wheel pair (the rear wheel pair), the load F acting on the fifth wheel and being distributed to the second wheel pair can roughly be approximated as being 100%-10% of the total load of the fifth wheel. The load on the front wheel pair can hence be estimated as around 10% of the total load on the fifth wheel. Hence, for a vehicle, it may be envisaged that the more close to the longitudinal position of the wheel pair 103a, 103b the load carrying structure 105 is positioned, the more advantageous load distribution is achieved when considering avoiding the load being transferred through the frame structure 102.

Dynamic load distribution is herein defined as load that is distributed when the vehicle or load carrying structure is moving, for example rolling activity and vibrations. By connecting the upper end of the spring and/or damper arrangement in an individual wheel suspension, not to the frame structure, but to a load carrying structure directly or indirectly, hence separated from the frame structure, rolling forces can be mitigated in a more direct and efficient way. Advantageously, the spring and/or damper arrangements 106 and 107 should be arranged with an upper portion 106a, 107a close to the an outer end of the load carrying structure 105 and the lower portion close to the wheels 103a, 103b.

It has been found that the impact of dynamic forces can be significantly reduced. An advantage with using individual wheel suspension combined with the arrangement of the spring and/or dampers as defined in claim 1, a significant improvement of anti-roll effect is achieved. Distribution of vibrations through the frame structure 102 can also be significantly reduced. Thereby, prolonged life time of a number of components is expected. Also the driver will experience higher driver comfort as the vibrations distributed from the load carryings structure via the frame structure to the cab is significantly reduced.

Advantageously, in order to achieve an efficient inhibition/reduction of rolling activity, the spring and/or damper arrangement 106, 107 in the individual wheel suspension 104 should be arranged close to the wheels and preferably with an inclined operational direction in relation to a height axis (Y) of the vehicle. The inclined operational direction can be described by an upper portion of the spring and/or damper arrangement being positioned more close to the center between the longitudinal frame beams than a lower portion of the spring and/or damper arrangement. That is, the spring and/or damper arrangements 106 and 107 extend not vertically but in an angle which results in that the first and a second spring and/or damper arrangement 106, 107 incline towards the load carrying structure 105. Preferably, the inclined operational direction of the spring and/or damper arrangements 106, 107 relative to the height axis (Y) forms an angle α which is in the range of from 20 to 60 degrees, preferably from 40 to 60 degrees. In order to achieve an optimal anti-roll effect, it has been found that the angle a should be as large as possible. In other words, the lower ends 106b and 107b should be positioned with a long distance from each other, and for example be connected to the wheel hubs 103a, 103b at a distance in the range of from 1.0 m to 2.5 m, preferably 1.30 m - 2.5 m, more preferably 1.6 - 2.5 m, most preferably at distance above 1.75 m, while the distance between the upper ends 106a and 107a should be smaller than the distance between the lower ends 106b and 107b, preferably in the range of from about 0.4 m to about 1.4 m. However, in order to achieve optimal anti-roll effect, the upper ends should be connected to the outer parts ot the load carrying structure, therefore it is particularly suitable for centrally placed load carrying structures for example a fifth wheel or a centrally positioned support structure. Hence, the spring and/or damper arrangements 106 and 107 should advantageously be arranged with an upper portion 106a, 107a close to the an outer end of the load carrying structure 105 and the lower portion close to the wheels 103a, 103b.

Due to the inclined operational direction of the spring/damper units 106, 107 and the individual wheel suspension 104, an beneficial counter force is achieved which optimally reduces/inhibits the rolling activity, especially with regards to side forces and rotational forces. In some embodiments it has been found that the need for stabilizer bars can be significantly reduced, for example the dimension of the bar may be reduced by 50 % or more. Theoretical calculations have even shown that the wheel suspension arrangement in some cases even may allow for the exclusion of stabilizer bars.

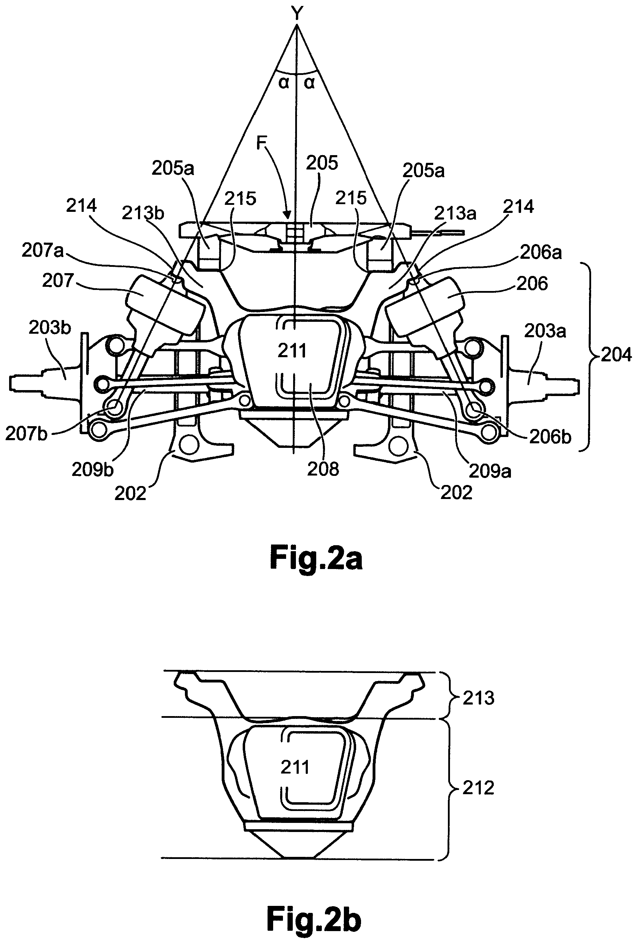

It should be noted that when the spring/dampers are inclined, the vertical damping effect is reduced. Therefore, in order to achieve comparable effect as for a vertical damper, it may be necessary to increase the stiffness of the damper. In some embodiments, it may be expected that a major part of the rolling forces can be mitigated directly without influencing the frame structure. For example, preferably above 60%, more preferably above 75%, of the load (F) may be distributed from load carrying structure to a wheel pair via the spring and/or damper arrangements, essentially without being distributed via the frame structure. Due to the presence of vertically movable axles for the wheels in the wheel pair, the rolling activity is taken care of by the counterforce of the spring/damper units. Fig. 2a-d schematically depicts selected parts of a heavy vehicle 200 according to the invention. This embodiment is built on several common concepts as the first embodiment. For example, the vehicle 200 comprises a frame structure 202, a first and second wheel 203a and 203b, an individual wheel suspension 204, and a fifth wheel as load carrying structure 205. The individual wheel suspension 204 further comprises spring and/or damper arrangements 206 and 207 being arranged between the wheels 203a and 203b and the load carrying structure 205. Also, the spring and/or damper arrangements 206 and 207 are pivotally connected with their upper ends 206a and 207a to the close to the load carrying structure 205. The lower ends 206b and 207b of the spring and/or damper arrangements 206 and 207 are pivotally connected to the wheels 203a and 203b, such as to the wheel hubs. Alternatively, the lower portions 206b and 207b may be connected to the wheels at an end section of a wheel suspension rod close to the wheel. The spring and/or damper arrangements 206,207 are illustrated in Fig. 2a-d by air bellows integrated on top of hydraulic dampers. The second embodiment may have the same configuration and characteristics as described for the first embodiment expect for the following three main differences.

A first difference from the first embodiment is that in Fig. 2a-d, the spring and/or damper arrangements 206, 207 are not directly connected to the load carrying structure 205 but indirectly connected to the load carrying structure 205 via a chassis component 211. The chassis component 211 comprises a body having a main portion 212 and an upper portion 213 provided on top of the main portion 212, see Fig. 2b. The chassis component 211 is arranged essentially between the first and the second wheels 203a and 203b and is connected to the frame structure 202. The chassis component 211 thereby supports the load carrying structure 205.

The main portion 212 is configured for being connected to the frame structure 302 so that the main portion 212 forms an extension of the frame structure 202 in its longitudinal direction. The load carrying structure 205 is mounted to the upper portion 213 of the chassis component 211. The spring and damper arrangements are further connected to the upper portion 213 of the chassis component 211. Therefore, at least part of a load (F) from the load carrying structure 205 is allowed to be distributed to the wheels 203a, 203b via the spring and/or damper arrangement 206, 207 bypassing the frame structure 202. The chassis component 211 is connected to the frame structure 202.

The main portion 212 is attached to the frame structure 202. Preferably, the main portion 212 comprises connection points 216 for connecting the chassis component 211 to an end portion of the frame structure 202. Thereby, the chassis component 211 may also function as an extension of the frame structure 202. Alternatively the main portion 212 may be provided between the longitudinal frame beams 202a and 202b. The frame structure 202 is connected to the main portion 212. The upper portion 213 is located above the main portion 212 in height direction of the vehicle (Y-axis). Thereby, the load (F) acting the load carrying structure 205 is mainly distributed though the fifth wheel holder to the wheels 103a and 103b via the upper portion 213 and the spring and/or damper arrangements 206, 207.

The upper portion 213 comprises connection points 214 and 215. The connection points 214 are construed for the spring and/or damper arrangements 206 and 207 and connection points 215 are provided for the load carrying structure 205. In this way the upper portion 213 connects the load carrying structure 205 to the spring and/or damper arrangements 206, 207. The upper portion 213 may be arranged in different ways depending on the type of load carrying structure. However, an even improved inhibition of rolling can be achieved by arranging the connection points 214 with a short distance from the connection points 215 for the load carrying structure 205, for example a distance of less than 0.3 m, preferably a distance of less than 0.1 m. Thereby, a reduced force distribution through the frame structure through is achieved. The upper portion 213 of the chassis component 211 may preferably be arranged as two or more at least partly upwards extending portions 213a, 213b, wherein at least one portion 213a or 213b is positioned on each side of the main portion 212. The upwards extending portions 213a and 213b may each comprise connection points 214 for at least one or more spring/and or damper arrangements 206 and 207 and comprise connection points 215. Alternatively, the upper portion 213 may be formed in other ways, for example it may be formed as one uniform upper portion positioned above the main portion of the chassis component.

The chassis component 211 can advantageously be more rigid than the frame structure 202 in a transverse direction relative to the length of the vehicle. The stiffness of the chassis component 211 may be at least two times higher than the stiffness of the frame structure 202, more preferably the stiffness is more than 10 times higher than the stiffness of the frame structure 202 in a transverse direction relative to the length of the vehicle.

The chassis component may be a casted iron component formed as one body. Hence the main portion and the upper portion may be formed as one integrated unit. Alternatively the main portion and the upper portion may be constructed separately and thereafter the upper portion or portions are mounted to the main portion.

The chassis component 211 may have supplementary technical functions. For example, the chassis component 211 may be at least partly hollow and function as housing for functional units such as a differential unit 208. In this case, the chassis component comprises openings for the individual axles 209a and 209b for the wheels 203a and 203b. Also other functional units may be partly or completely housed by the chassis component, for example a gear box or a drive unit such as an electric, hydraulic or gas engine. For example, at least part of a differential unit and/or a gear unit may be housed inside the chassis component 211, preferably in the main portion 212 of the chassis component. In some embodiments of the invention, a full gear box is housed inside the chassis component.

Also, the chassis component 211 may comprise connection elements for mounting a functional unit to the chassis component 211. The functional unit may be a differential, a gear box, a drive unit such as an electric, hydraulic or gas engine. For example, the chassis component 211 may at its rear portion be provided with a connection area for such a function unit. Alternatively, the front portion may be provided with connection points or connection areas for such functional units. Advantageously, a front and/or a rear surface of the main portion 212 of the body is/are provided with a hole for a propeller shaft 218 or equivalents. Alternatively, the body may for example be provided with a hole for pipes connected to a hydraulic motor positioned inside the chassis component 211.

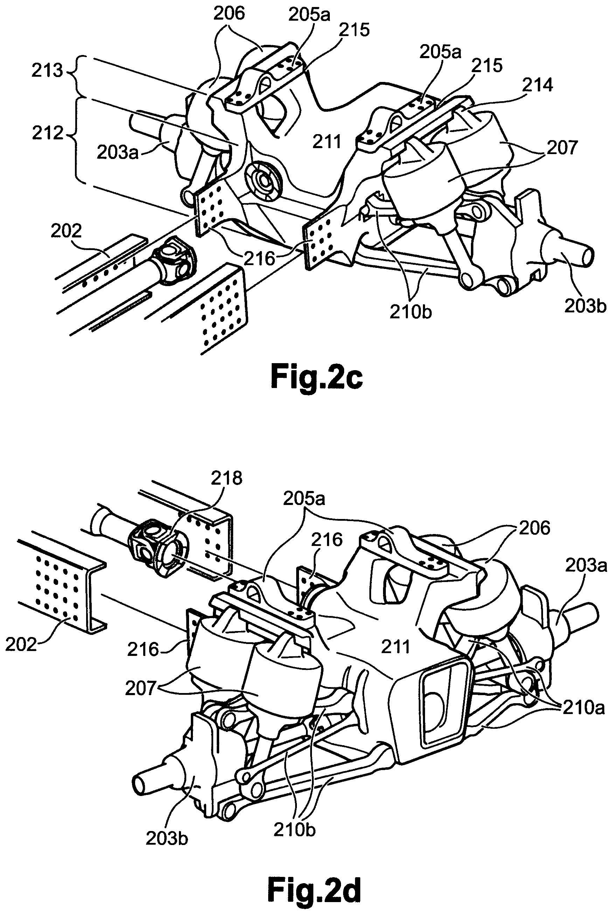

The chassis component 211 may also comprise attachment points for wheel suspension rods 210, see Fig. 2c. Three wheel suspension rods 210a, 210b are used at each wheel, wherein the rods are connected to the main portion 212 of the chassis component 211. However, also other configurations may be possible. The amount of wheel suspension rods and suitable positioning of these will depend on the specific application of the invention. In the second embodiment, the three rods include two V-shaped rods and one toe-link rod, which are arranged between the wheels and the chassis component 211.

A second difference between the first embodiment and the second embodiment is that in the second embodiment two additional (a third and a fourth) spring and or damper units 206, 207 are used. These are positioned at each of the wheels 213a, 213b. Hence, there may be two spring and damper units arranged between the load carrying structure and each wheel in the wheel pair. The spring and/or damper arrangements can for example be connected at two opposite sides to the wheel hub as shown in Fig. 2c and Fig. 2d. The additional spring and/or damper arrangements may have the same characteristics as the first and second spring and/or damper arrangement.

A third between the first embodiment and the second embodiment is that in the second embodiment a central frame member 202 is used as frame structure. The central frame member is composed of a centrally positioned beam structure 202 which extends in longitudinal direction. In Fig. 2a, 2c and 2d, the beam structure is formed of two longitudinal beams, however it is also possible to use one tube-shaped longitudinal beam. The central frame member 202 provides for completely different way of packaging components/units of the vehicle. Due to the use of individual wheel suspension for the driven rear wheels, the propeller shaft does not need as much space in vertical direction as for propeller shafts for rigid axles. Therefore, the central frame member may be an elongated housing for the propeller shaft. The chassis component 211 may be formed as an integral part of the housing of the propeller shaft. Vehicular components may be packed in boxes surrounding the housing of the propeller shaft. However, it should be noted that the chassis component 211 is also suitable for a conventional frame structure comprising two beams extending in longitudinal direction, where the beams are positioned spaced apart and close to the outer longitudinal sides of the vehicle.

The invention is not limited to the embodiments described above. In contrast, many modifications are possible within the same inventive concept. For example, the invention may be applied for many types of vehicles, especially vehicles where the risk for rolling is significant. Therefore, the invention is applicable to vehicles having a total weight above 3500 kg in particular the invention is directed towards heavy trucks and tractors. In order to illustrate that the invention is not limited to only tractors having a fifth wheel (as shown in Fig. 1-2), the following additional embodiments of the invention are mentioned.

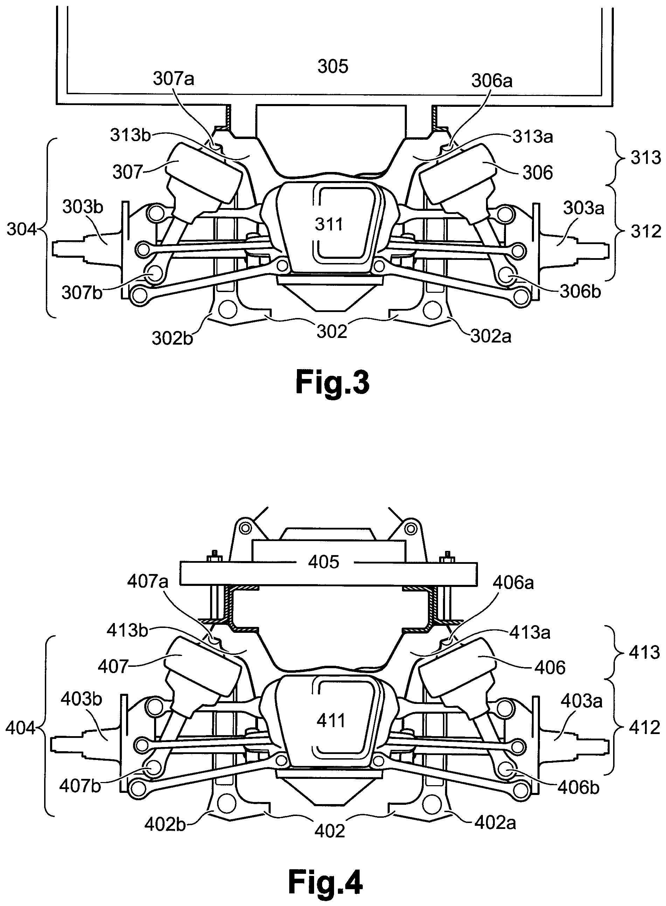

Fig. 3 shows a rear portion of a truck having a cargo supporting structure as load carrying structure 305 arranged on top of the upper portions 313a and 313b of a chassis component 311 according to an embodiment of the invention. As can be seen in the Fig. 3, the spring and/or damper arrangement 306 and 307 are connected to the load carrying structure 305 via the upper portions 313a and 313b of the chassis component 311. Further, the spring and/or damper arrangement 306 and 307 are connected to the wheel hubs 303a and 303b. The main portion 312 of the chassis component 311 is connected to the frame beams 302a and 303b. Hence, the spring and/or damper arrangements 306 and 307 are indirectly connected to the load carrying structure 305 in a position above or beside said frame structure 302. In this way the load impact on the frame beams can be significantly reduced.

Fig. 4 shows a rear portion of a truck according to an embodiment of the invention where the load carrying structure is a console structure 405 for a functional device such as a lift device. As can be seen in the Fig. 4, the spring and/or damper arrangement 406 and 407 are connected to the load carrying structure 405 via the upper portions 413a and 413b of the chassis component 411. Further, the spring and/or damper arrangement 406 and 407 are connected to the wheel hubs 403a and 403b. The main portion 412 of the chassis component 411 is connected to the frame beams 402a and 403b. Hence, the spring and/or damper arrangements 406 and 407 are indirectly connected to the load carrying structure 405 in a position above or beside said frame structure 402. In this way the load impact on the frame beams can be significantly reduced.

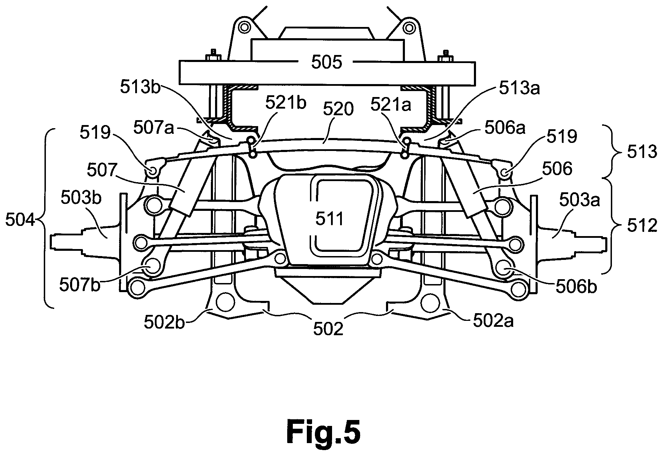

Fig. 5 shows a rear portion of a truck according to a further embodiment of the invention, where the load carrying structure is a console structure 505. The embodiment shows an example of using springs and dampers as separate components. As can be seen in the Fig. 5, damper arrangements 506 and 507 are connected to the load carrying structure 505 via the upper portions 513a and 513b of the chassis component 511. The dampers 506 and 507 may for example be hydraulic dampers. Further, the damper arrangements 506 and 507 are connected to the wheel hubs 503a and 503b. The main portion 512 of the chassis component 511 is connected to the frame beams 502a and 503b. Hence, the damper arrangements 506 and 507 are indirectly connected to the load carrying structure 405 in a position above or beside said frame structure 402. In Fig. 5, the wheel hub/inner wheel support of each wheel 503a and 503b has been prolonged in height direction and comprises connection points 519 for a first leaf spring 520 on its upper part. The first leaf spring 520 thereby is positioned in a transverse direction in relation to the longitudinal frame beams 502a and 502b. The first leaf spring 520 supports the chassis component 511 on its upper portion 513. Hydraulic dampers 506 and 507 are arranged between the upper portions 513a and 513b and the wheels 503a and 503b. Hence, in this embodiment, the spring and/or damper arrangement comprise a transverse leaf spring 520 and the dampers 506 and 507. It should be noted that is possible to include further transverse leaf springs in this embodiment of the invention. For example, it would be possible to use a second transversely positioned leaf spring which is arranged between a lower part of the wheel hub and a lower part of the chassis component. It should be noted that also longitudinal positioning of one or more leaf springs could be possible without deviating from the concept of the invention.

In conclusion, many different embodiments of the invention are possible, in particular with regards to the amount, exact positioning, and choice of spring/damper arrangements and the design of the chassis component. It should be noted that the invention is not limited to a rear wheel pair but can be applied to any wheel pair positioned between the front and rear wheels. Further the type of individual wheels suspension may be varied including for example the type and amount of wheel suspension rods. Therefore, the invention is applicable for many different types of heavy vehicles. For example, the vehicle may be provided with functional units as load carrying structure. Hence, the load carrying structure 205, 305, 405 may be any on-built unit which is arranged in direct or indirect connection with the spring and/or damper arrangements according to claim 1. Therefore, the invention is applicable both in trucks for transportation of goods and for tractors having a fifth wheel for hauling a trailer. Also, the invention is applicable for several other types of heavy vehicles for example special vehicles, such as vehicles provided with construction equipment like a digger unit; or a rescue vehicle such as a fire-fighting vehicle etc.

### Example 1: Vibration calculation

The level of vibrations reaching the cab was calculated (a) for a standard tractor and (b) for a tractor according to the invention. The standard tractor is here a 4x2 tractor provided with a rigid rear axle while the tractor according to the invention is provided with an independent wheel suspension arrangement with inclined spring and damper units as shown in Fig. 2.

A vehicle analysis method (so called complete vehicle modeling, CVM) was used for estimating the vibrations experienced inside the cab of the vehicles. The acceleration during a time period where the vehicle is driving on a random noise road was calculated. This acceleration value is indicative for the level of vibrations inside the cab.

Longitudinal as used herein refers to a direction along the length of the vehicle. Lateral as used herein refers to refers to a direction in the transverse direction relative the length of the vehicle. Vertical as used herein refers to vibrations along the height of the vehicle. The overall comfort value is a calculated mean value of the vibrations where all the three directions are included.

**Table 1:**

| Calculated values | Standard (a) | IRS (b) | Frequency range (Hz) |
|---|---|---|---|
| Longitudinal B-pillar LH-side | 0.46 | 0.44 | 1.2-12 |
| Lateral B-pillar LH-side | 0.31 | 0.26 | 0.7-1.5 |
| Vertical B-pillar LH-side | 0.43 | 0.41 | 0.7-1.5 |
| Overall comfort value | 0.71 | 0.66 | 1.2 |

From table 1, it is demonstrated that the acceleration values "b" are below the acceleration values "a" for longitudinal and lateral and the overall value. Hence, vibrations can be significantly reduced in with the solution according to the invention.

### Example 2: Stability calculation

The level of rolling of a tractor trailer combination was estimated (a) using a vehicle analysis method (CVM), for a standard tractor (a) and for tractor according to the invention (b). The same configurations of the vehicles as used in example 1 were also used in example 2.

**Table 2:**

| Calculated values | Standard (a) | IRS (b) |
|---|---|---|
| Effective vertical stiffness | kz=317 N/mm | kz=323* N/mm |
| Roll stiffness | kϕ=487 kNm/rad | kϕ=578 kNm/rad |
| Effective vertical damping | cz=33 Ns/mm (lin 0) | cz=24** Ns/mm (lin 0) |
| Roll damping | cϕ=19149 Nsm/rad | cϕ=42393 Nsm/rad |

As can be seen from the calculation results in Table 2, the roll damping effect for the vehicle according to the invention is more than twofold of the damping effect of the standard truck. Hence, the roll damping effect is very significant compared to the reference value for the comparable vehicle with rigid rear axle. The increased roll damping means that vehicles having the arrangement according to the invention may be produced with a stabilizer bar of smaller dimension or in some cases even without the stabilizing bar. This would result in a significant reduction of weight of the vehicle.

It can further be seen from Tab. 2, the effective vertical damping was somewhat reduced. This is due to that the same type of spring and damper units for the vehicle a and b. For vehicle b, the inclined angle of the spring and/or damper arrangement results in that the damping in vertical direction is somewhat decreased. In order to achieve the corresponding effective vertical damping value as for a standard truck (vehicle a), a stiffer damper can be used. It will be obvious for those skilled in the art to choose a suitable stiffness for the spring and damper units.

## Claims

1. A heavy vehicle comprising a frame structure (202, 302, 402, 502) comprising frame beams extending in a longitudinal direction of the vehicle, at least a first rear wheel (103a, 203a, 303a, 403a, 503a), an independent wheel suspension (204, 304, 404, 504) for said at least first rear wheel (103a, 203a, 303a, 403a, 503a) and a load carrying structure (205, 305, 405, 505) for carrying a load applied to the vehicle, wherein the independent wheel suspension (204, 304, 404, 504) comprises a first spring or spring and damper arrangement (206, 306, 406, 506) and wheel suspension rods (210a, 210b), **characterized in**
**that** the first spring or spring and damper arrangement (206, 306, 406, 506) is connected to the load carrying structure (205, 305, 405, 505) via a chassis component (211,311,411,511);
**that** the chassis component (211, 311, 411, 511) comprises a body, having a main portion (212) and an upper portion (213) mounted on top of the main portion ((212); that the main portion (212) is arranged to be connected to the frame structure (202, 302, 402, 502), forming a transverse cross-member connecting the frame beams; that the upper portion (213) is arranged to support the main portion (212) and the frame structure ( 202, 302, 402, 502) connected to the main portion (212);
**that** the upper portion (213) is configured for being connected to the load carrying structure (205, 305, 405, 505), that the first spring or spring and damper arrangement (206, 306, 406, 506) at a first end ( 206a, 306a, 406a, 506a) is connected to the load carrying structure (205, 305, 405, 505) via the upper portion (213) in a position above or beside said frame structure (202, 302, 402, 502) and which at a second end (206b, 306b, 406b, 506b) is connected to the first rear wheel (203a, 303a, 403a,503a); and that the wheel suspension rods (210a, 210b) are connected to the main portion (212) at a first end and to the first rear wheel (203a, 303a, 403a,503a) at a second end;
wherein the load (F) supported by the first rear wheel (203a, 303a, 403a, 503a) is distributed from the load carrying structure (205, 305, 405, 505) to the wheel (203a, 203b) via said first spring or spring and damper arrangement (206, 306, 406, 506) bypassing said frame structure (202, 302, 402, 502).

2. The vehicle according to claim 1, **characterized in that** the spring or spring and damper arrangement (206, 306, 406, 506) is formed as one component comprising both spring and damper function.

3. The vehicle according to any one of the preceding claims, **characterized in that** the first spring or spring and damper arrangement (206, 306, 406, 506) is arranged with an inclined operational direction in relation to a height axis (Y) of the vehicle.

4. The vehicle according to claim 4, **characterized in that** the inclined operational direction of the first spring or spring and damper arrangement (206, 306, 406, 506) relative to the height axis (Y) forms an angle a which is in the range of from 20 to 60 degrees, preferably in the range of from 40 to 60 degrees.

5. The vehicle according to any one of the preceding claims, **characterized in that** the first spring or spring and damper arrangement (206, 306, 406, 506) has a spring function resulting from an air spring, a gas spring, a hydraulic spring, a coil spring, a rubber spring and/or a leaf spring.

6. The vehicle according to any one of the preceding claims, **characterized in that** the first spring and/or damping unit (206, 306, 406, 506) has a damper function resulting from an air damper, a gas damper, a hydraulic damper and/or a rubber damper.

7. The vehicle according to any one of the preceding claims, **characterized in that** the first spring or spring and damper arrangement (206, 306, 406, 506) comprise a spring arranged on top of a damper, preferably an air bellow and a hydraulic damper.

8. The vehicle according to any one of the preceding claims, **characterized in that** the vehicle comprises a second wheel (203b, 303b, 403b, 503b) positioned on opposite side of the frame structure (202, 302, 402, 502) at the same length position from a front of the vehicle as the first wheel (203a, 303a, 403a), wherein said independent wheel suspension (204, 304, 404, 504) further comprises a second spring or spring and damper arrangement (207, 307, 407, 507) which at a first end (207a, 307a, 407a, 507a) is connected to the load carrying structure (205, 305, 405, 505) in a position above or beside said frame structure (202, 302, 402, 502) and which at a second end (207b, 307b, 407b, 507b) is connected to the second wheel (203b, 303b, 403b, 503b), wherein preferably the second spring or spring and damper arrangement (207, 307, 407, 507) has the same characteristics as the first spring or spring and damper arrangement (206, 306, 406, 506).

9. The vehicle according to any one of the preceding claims, **characterized in that** the load carrying structure (205, 305, 405, 505) is a fifth wheel or a fifth wheel holder, a goods supporting structure, a box for goods, a container, a swap body, an on-built console structure or an on-built functional unit.

10. The vehicle according to any one of the preceding claims, **characterized in that** the vehicle is a tractor for hauling a trailer and the load carrying structure (205) is a fifth wheel or fifth wheel holder.

11. The vehicle according to any one of the preceding claims, **characterized in that** the upper portion (213, 313) comprises two upwards extending portions (213a, 213b, 313a, 313b), one on each side of the main portion (212, 312), wherein each of said upwards extending portions (213a, 213b, 313a, 313b) comprises connection elements (214, 215, 314, 315) for the spring/and or damper arrangement (206, 207, 306, 307) and the load carrying structure (205, 305).

12. The vehicle according to any one of the preceding claims, **characterized in that** the frame structure (202, 302) comprises a central frame member arranged in a longitudinal direction relative to the vehicle, and wherein the chassis component (211, 311) is connected to the central frame member at the rear end of the central frame member.

13. The vehicle according to any one of the claims, **characterized in that** said chassis component (211,311) comprises a hollow space for housing one or more functional units, such as at least part of a propeller shaft, a gear box, a differential unit and/or a drive unit such as an electrical, hydraulic or gas electric engine.

## Patentansprüche

1. Schwerlastfahrzeug, umfassend eine Rahmenstruktur (202, 302, 402, 502), die Rahmenträger umfasst, die sich in einer Längsrichtung des Fahrzeugs erstrecken, mindestens ein erstes Hinterrad (103a, 203a, 303a, 403a, 503a), eine unabhängige Radaufhängung (204, 304, 404, 504) für das mindestens erste Hinterrad (103a, 203a, 303a, 403a, 503a) und eine lasttragende Struktur (205, 305, 405, 505) zum Tragen einer Last, die auf das Fahrzeug ausgeübt wird, wobei die unabhängige Radaufhängung (204, 304, 404, 504) eine erste Feder oder Feder- und Dämpferanordnung (206, 306, 406, 506) und Radaufhängungsstangen (210a, 210b) umfasst, **dadurch gekennzeichnet, dass** die erste Feder oder Feder- und Dämpferanordnung (206, 306, 406, 506) mit der lasttragenden Struktur (205, 305, 405, 505) über eine Fahrgestellkomponente (211, 311, 411, 511) verbunden ist;
dass die Fahrgestellkomponente (211, 311, 411, 511) einen Körper umfasst, der einen Hauptabschnitt (212) und einen oberen Abschnitt (213), der an einer Oberseite des Hauptabschnitts (212) montiert ist, umfasst;
dass der Hauptabschnitt (212) angeordnet ist, mit der Rahmenstruktur (202, 302, 402, 502) verbunden zu sein, um einen querverlaufendem Querträger zu bilden, der die Rahmenträger verbindet;
dass der obere Abschnitt (213) angeordnet ist, den Hauptabschnitt (212) und die Rahmenstruktur (202, 302, 402, 502), die mit dem Hauptabschnitt (212) verbunden ist, zu stützen;
dass der obere Abschnitt (213) zur Verbindung mit der lasttragenden Struktur (205, 305, 405, 505) gestaltet ist,
dass die erste Feder oder Feder- und Dämpferanordnung (206, 306, 406, 506) an einem ersten Ende (206a, 306a, 406a, 506a) über den oberen Abschnitt (213) in einer Position über oder neben der Rahmenstruktur (202, 302, 402, 502) mit der lasttragenden Struktur (205, 305, 405, 505) verbunden ist und an einem zweiten Ende (206b, 306b, 406b, 506b) mit dem ersten Hinterrad (203a, 303a, 403a, 503a) verbunden ist; und
dass die Radaufhängungsstangen (210a, 210b) mit dem Hauptabschnitt (212) an einem ersten Ende und mit dem ersten Hinterrad (203a, 303a, 403a, 503a) an einem zweiten Ende verbunden sind;
wobei die Last (F), die von dem ersten Hinterrad (203a, 303a, 403a, 503a) gestützt wird, von der lasttragenden Struktur (205, 305, 405, 505) zu dem Rad (203a, 203b) über die erste Feder oder Feder- und Dämpferanordnung (206, 306, 406, 506) unter Umgehung der Rahmenstruktur (202, 302, 402, 502) verteilt wird.

2. Fahrzeug nach Anspruch 1, **dadurch gekennzeichnet, dass** die Feder oder Feder- und Dämpferanordnung (206, 306, 406, 506) als eine Komponente gebildet ist, die sowohl Feder- als auch Dämpferfunktion umfasst.

3. Fahrzeug nach einem der vorstehenden Ansprüche, **dadurch gekennzeichnet, dass** die erste Feder oder Feder- und Dämpferanordnung (206, 306, 406, 506) mit einer geneigten Betriebsrichtung in Relation zu einer Höhenachse (Y) des Fahrzeugs angeordnet ist.

4. Fahrzeug nach Anspruch 4, **dadurch gekennzeichnet, dass** die geneigte Betriebsrichtung der ersten Feder oder Feder- und Dämpferanordnung (206, 306, 406, 506) relativ zu der Höhenachse (Y) einen Winkel a bildet, der in dem Bereich von 20 bis 60 Grad, vorzugsweise in dem Bereich von 40 bis 60 Grad ist.

5. Fahrzeug nach einem der vorstehenden Ansprüche, **dadurch gekennzeichnet, dass** die erste Feder oder Feder- und Dämpferanordnung (206, 306, 406, 506) eine Federfunktion hat, die aus einer Luftfeder, einer Gasfeder, einer hydraulischen Feder, einer Spiralfeder, einer Gummifeder und/oder einer Blattfeder resultiert.

6. Fahrzeug nach einem der vorstehenden Ansprüche, **dadurch gekennzeichnet, dass** die erste Feder- und/oder Dämpferanordnung (206, 306, 406, 506) eine Dämpferfunktion hat, die aus einem Luftdämpfer, einem Gasdämpfer, einem hydraulischen Dämpfer und/oder einem Gummidämpfer resultiert.

7. Fahrzeug nach einem der vorstehenden Ansprüche, **dadurch gekennzeichnet, dass** die erste Feder oder Feder- und Dämpferanordnung (206, 306, 406, 506) eine Feder umfasst, die an einer Oberseite eines Dämpfers, vorzugsweise einem Luftbalg und einem hydraulischen Dämpfer, angeordnet ist.

8. Fahrzeug nach einem der vorstehenden Ansprüche, **dadurch gekennzeichnet, dass** das Fahrzeug ein zweites Rad (203b, 303b, 403b, 503b) umfasst, das an einer gegenüberliegenden Seite der Rahmenstruktur (202, 302, 402, 502) an derselben Längenposition von einer Vorderseite des Fahrzeugs wie das erste Rad (203a, 303a, 403a) angeordnet ist, wobei die unabhängige Radaufhängung (204, 304, 404, 504) weiter eine zweite Feder oder Feder- und Dämpferanordnung (207, 307, 407, 507) umfasst, die an einem ersten Ende (207a, 307a, 407a, 507a) mit der lasttragenden Struktur (205, 305, 405, 505) in einer Position über oder neben der Rahmenstruktur (202, 302, 402, 502) verbunden ist und die an einem zweiten Ende (207b, 307b, 407b, 507b) mit dem zweiten Rad (203b, 303b, 403b, 503b) verbunden ist, wobei vorzugsweise die zweite Feder oder Feder- und Dämpferanordnung (207, 307, 407, 507) dieselben Eigenschaften wie die erste Feder oder Feder- und Dämpferanordnung (206, 306, 406, 506) hat.

9. Fahrzeug nach einem der vorstehenden Ansprüche, **dadurch gekennzeichnet, dass** die lasttragende Struktur (205, 305, 405, 505) ein fünftes Rad oder eine fünfte Radhalterung, eine Warenstützstruktur, eine Kiste für Waren, ein Behälter, ein Wechselkoffer oder eine eingebaute Konsolenstruktur oder eine eingebaute Funktionseinheit ist.

10. Fahrzeug nach einem der vorstehenden Ansprüche, **dadurch gekennzeichnet, dass** das Fahrzeug ein Traktor zum Ziehen eines Anhängers ist und die lasttragende Struktur (205) ein fünftes Rad oder eine fünfte Radhalterung ist.

11. Fahrzeug nach einem der vorstehenden Ansprüche, **dadurch gekennzeichnet, dass** der obere Abschnitt (213, 313) zwei sich nach oben erstreckende Abschnitte (213a, 213b, 313a, 313b) umfasst, einen an jeder Seite des Hauptabschnitts (212, 312), wobei jeder der sich nach oben erstreckenden Abschnitte (213a, 213b, 313a, 313b) Verbindungselemente (214, 215, 314, 315) für die Feder- und/oder Dämpferanordnung (206, 207, 306, 307) und die lasttragende Struktur (205, 305) umfasst.

12. Fahrzeug nach einem der vorstehenden Ansprüche, **dadurch gekennzeichnet, dass** die Rahmenstruktur (202, 302) ein zentrales Rahmenelement umfasst, das in einer Längsrichtung relativ zu dem Fahrzeug angeordnet ist, und wobei die Fahrgestellkomponente (211, 311) mit dem zentralen Rahmenelement am hinteren Ende des zentralen Rahmenelements verbunden ist.

13. Fahrzeug nach einem der vorstehenden Ansprüche, **dadurch gekennzeichnet, dass** die Fahrgestellkomponente (211, 311) einen Hohlraum zum Aufnehmen einer oder mehrerer Funktionseinheiten umfasst, wie mindestens Teil einer Antriebswelle, eines Getriebekastens, einer Differentialeinheit und/oder einer Antriebseinheit wie eines Elektro-, Hydraulik- oder Gaselektromotors.

## Revendications

1. Véhicule lourd comprenant une structure de cadre (202, 302, 402, 502) comprenant des poutrelles de cadre s'étendant dans une direction longitudinale du véhicule, au niveau d'au moins une première roue arrière (103a, 203a, 303a, 403a, 503a), une suspension de roue indépendante (204, 304, 404, 504) pour ladite au moins une première roue arrière (103a, 203a, 303a, 403a, 503a) et une structure porteuse de charge (205, 305, 405, 505) pour porter une charge appliquée au véhicule, dans lequel la suspension de roue indépendante (204, 304, 404, 504) comprend un premier ressort ou agencement de ressort et amortisseur (206, 306, 406, 506) et des tiges de suspension de roue (210a, 210b), **caractérisé**
**en ce que** le premier ressort ou agencement de ressort et amortisseur (206, 306, 406, 506) est raccordé à la structure porteuse de charge (205, 305, 405, 505) via un composant de châssis (211, 311, 411, 511) ;
**en ce que** le composant de châssis (211, 311, 411, 511) comprend un corps, présentant une portion principale (212) et une portion supérieure (213) montée en haut de la portion principale (212) ;
**en ce que** la portion principale (212) est agencée pour être raccordée à la structure de cadre (202, 302, 402, 502), formant un organe transversal raccordant les poutrelles de cadre ;
**en ce que** la portion supérieure (213) est agencée pour supporter la portion principale (212) et la structure de cadre (202, 302, 402, 502) raccordée à la portion principale (212) ;
**en ce que** la portion supérieure (213) est configurée pour être raccordée à la structure porteuse de charge (205, 305, 405, 505),
**en ce que** le premier ressort ou agencement de ressort et amortisseur (206, 306, 406, 506) à une première extrémité (206a, 306a, 406a, 506a) est raccordé à la structure porteuse de charge (205, 305, 405, 505) via la portion supérieure (213) dans une position au-dessus ou à côté de ladite structure de cadre (202, 302, 402, 502) et qui à une seconde extrémité (206b, 306b, 406b, 506b) est raccordé à la première roue arrière (203a, 303a, 403a, 503a) ; et
**en ce que** les tiges de suspension de roue (210a, 210b) sont raccordées à la portion principale (212) à une première extrémité et à la première roue arrière (203a, 303a, 403a, 503a) à une seconde extrémité ;
dans lequel la charge (F) supportée par la première roue arrière (203a, 303a, 403a, 503a) est répartie de la structure porteuse de charge (205, 305, 405, 505) à la roue (203a, 203b) via ledit ressort ou agencement de ressort et amortisseur (206, 306, 406, 506) en contournant ladite structure de cadre (202, 302, 402, 502).

2. Véhicule selon la revendication 1, **caractérisé en ce que** le ressort ou agencement de ressort et amortisseur (206, 306, 406, 506) est formé comme un composant comprenant une fonction à la fois de ressort et d'amortisseur.

3. Véhicule selon l'une quelconque des revendications précédentes, **caractérisé en ce que** le premier ressort ou agencement de ressort et amortisseur (206, 306, 406, 506) est agencé avec une direction opérationnelle inclinée en rapport avec un axe de hauteur (Y) du véhicule.

4. Véhicule selon la revendication 4, **caractérisé en ce que** la direction opérationnelle inclinée du premier ressort ou agencement de ressort et amortisseur (206, 306, 406, 506) par rapport à l'axe de hauteur (Y) forme un angle a qui est dans la plage de 20 à 60 degrés, de préférence dans la plage de 40 à 60 degrés.

5. Véhicule selon l'une quelconque des revendications précédentes, **caractérisé en ce que** le premier ressort ou agencement de ressort et amortisseur (206, 306, 406, 506) présente une fonction de ressort résultant d'un ressort pneumatique, d'un ressort à gaz, d'un ressort hydraulique, d'un ressort hélicoïdal, d'un ressort en caoutchouc et/ou d'un ressort à lames.

6. Véhicule selon l'une quelconque des revendications précédentes, **caractérisé en ce que** le premier ressort et/ou l'unité d'amortissement (206, 306, 406, 506) présentent une fonction d'amortisseur résultant d'un amortisseur pneumatique, d'un amortisseur à gaz, d'un amortisseur hydraulique et/ou d'un amortisseur en caoutchouc.

7. Véhicule selon l'une quelconque des revendications précédentes, **caractérisé en ce que** le premier ressort ou agencement de ressort et amortisseur (206, 306, 406, 506) comprend un ressort agencé en haut d'un amortisseur, de préférence un soufflet pneumatique et un amortisseur hydraulique.

8. Véhicule selon l'une quelconque des revendications précédentes, **caractérisé en ce que** le véhicule comprend une deuxième roue (203b, 303b, 403b, 503b) positionnée sur un côté opposé de la structure de cadre (202, 302, 402, 502) à la même position de longueur à partir d'un avant du véhicule que la première roue (203a, 303a, 403a), dans lequel ladite suspension de roue indépendante (204, 304, 404, 504) comprend en outre un deuxième ressort ou agencement de ressort et amortisseur (207, 307, 407, 507) qui à une première extrémité (207a, 307a, 407a, 507a) est raccordé à la structure porteuse de charge (205, 305, 405, 505) dans une position au-dessus ou à côté de ladite structure de cadre (202, 302, 402, 502) et qui à une seconde extrémité (207b, 307b, 407b, 507b) est raccordé à la deuxième roue (203b, 303b, 403b, 503b), dans lequel de préférence le deuxième ressort ou agencement de ressort et amortisseur (207, 307, 407, 507) présente les mêmes caractéristiques que le premier ressort ou agencement de ressort et amortisseur (206, 306, 406, 506).

9. Véhicule selon l'une quelconque des revendications précédentes, **caractérisé en ce que** la structure porteuse de charge (205, 305, 405, 505) est une cinquième roue ou un cinquième porte-roue, une structure de support de marchandises, une benne pour marchandises, un conteneur, une caisse mobile, une structure de console ajoutée ou une unité fonctionnelle ajoutée.

10. Véhicule selon l'une quelconque des revendications précédentes, **caractérisé en ce que** le véhicule est un tracteur destiné à tracter une remorque et la structure porteuse de charge (205) est une cinquième roue ou un cinquième porte-roue.

11. Véhicule selon l'une quelconque des revendications précédentes, **caractérisé en ce que** la portion supérieure (213, 313) comprend deux portions en extension vers le haut (213a, 213b, 313a, 313b), une sur chaque côté de la portion principale (212, 312), dans lequel chacune desdites portions en extension vers le haut (213a, 213b, 313a, 313b) comprend des éléments de raccordement (214, 215, 314, 315) pour l'agencement de ressort et/ou d'amortisseur (206, 207, 306, 307) et la structure porteuse de charge (205, 305).

12. Véhicule selon l'une quelconque des revendications précédentes, **caractérisé en ce que** la structure de cadre (202, 302) comprend un organe de cadre central agencé dans une direction longitudinale par rapport au véhicule, et dans lequel le composant de châssis (211, 311) est raccordé à l'organe de cadre central à l'extrémité arrière de l'organe de cadre central.

13. Véhicule selon l'une quelconque des revendications, **caractérisé en ce que** ledit composant de châssis (211, 311) comprend un espace creux pour loger une ou plusieurs unités fonctionnelles, telles qu'au moins une partie d'un arbre de transmission, d'une boîte de vitesses, d'un groupe différentiel et/ou d'une unité d'entraînement telle qu'un moteur électrique, hydraulique ou à gaz et électrique.
